# EUROPEAN PATENT SPECIFICATION

(11) **EP 2 863 613 B1**
(45) Date of publication and mention of the grant of the patent: **19.12.2018**
(21) Application number: 13807582.5
(22) Date of filing: 28.05.2013
(51) Int. Cl.: H04L 29/08, G06F 17/30, H04W 4/60, H04L 29/06, H04W 12/06, H04W 12/02, H04W 4/00

(54) **METHOD USING MOBILE TERMINAL TO IMPLEMENT CLOUD SEARCHING**
VERFAHREN MIT EINEM MOBILEN ENDGERÄT ZUM IMPLEMENTIEREN EINER CLOUD-SUCHE
PROCÉDÉ UTILISANT UN TERMINAL MOBILE POUR METTRE EN OEUVRE LA RECHERCHE INFONUAGIQUE

(30) Priority: 18.06.2012 CN 201210200646
(43) Date of publication of application: 22.04.2015
(73) Proprietor: Huizhou TCL Mobile Communication Co., Ltd., Huizhou, Guangdong 516006 (CN)
(72) Inventor: ZHOU, Baozhong, Huizhou Guangdong 516006 (CN); SHEN, Kun, Huizhou Guangdong 516006 (CN); LI, Guicheng, Huizhou Guangdong 516006 (CN)
(74) Representative: Brachmann, Roland W.
(86) International application number: PCT/CN2013/076354
(87) International publication number: WO 2013/189230

(56) References cited:
- CN-A- 102 404 403
- CN-A- 102 467 524
- CN-A- 102 724 310
- US-A1- 2007 174 237
- US-A1- 2008 215 429
- US-A1- 2009 209 270
- US-A1- 2010 010 994
- US-A1- 2011 184 936
- US-A1- 2011 191 364

## Description

The present invention relates to the field of mobile communication technologies and, in particular, to a method using a mobile terminal to implement cloud searching.

With the development of modern mobile communication technologies and mobile Internet, a mobile terminal may be interacted with a cloud server through SMS (Short Messaging Service, short message service) services or Internet connection. At present, the calculating and storage functions of the mobile terminal have been greatly improved, so that the mobile terminal can store lots of information. However, due to such problems as information security and loss of the mobile terminal, a user generally needs to store or backup personnel data in a remote server in addition to saving the personnel data in the local mobile terminal. When the user needs to look up data from the large amount of data stored on the mobile terminal or the remote server, how to effectively and quickly find the information becomes a problem to be solved in the art.

US 2007/0174237 A1 discloses methods, systems and program storage devices for generating search engine search results. Online files relevant to a requested search query are located by a search engine, while simultaneously previously accessed oftline files residing on a client computer are located using the same search query. The search engine retrieves the offline files from the client computer and combines such offline files with the locate online files in a single search result overview. The listing of files within the combined search results are ranked according to relevancy to the search query using a search engine scoring algorithm, whereby the oftline files within the combined search results are preferably brought to a user's attention to indicate that such files reside on the client computer.

US 2011/0191364 A1 discloses methods, systems, and apparatus, including computer programs encoded on a computer storage medium, for providing live search suggestions. In one aspect, a method includes obtaining a suggested query tenn by a client device, initiating a live query to obtain live content relating to the suggested query term responsive to obtaining the suggested query term, obtaining the live content, and displaying the live content on a user interface of the client device

US 2008/0215429 A1 discloses a method and system for receiving a search keyword from an offline advertisement, entering the search keyword in a mobile communication facility search facility, and presenting content relating to the offline advertisement to the mobile communication facility based at least in part on the search keyword and a relevancy to a criterion associated with the mobile communication facility.

US 2010/0010994 A1 discloses that a social mobile network enables discovery of application programs running on the mobile devices. A search for partial or foll matches to a group of alphanumeric characters is performed on the data stored on the first mobile communication device on which the search is initiated. The search is also performed on data made available to the user of the first mobile communication device by other users, where each user is associated with a different one of a multitude of mobile communication devices. The sharing of the data and the search for shared data is made via a server with which the mobile communication devices are in communication. The discovery of applications whose names or descriptions are partially or fully matched to the alphanumeric characters is made despite the fact that user was not looking for or aware of the existence of such application programs.

In view of the defects of the prior art, the present invention aims at providing a method using a mobile terminal to implement cloud searching, which can effectively and quickly look up the data stored on the local of the mobile terminal and the cloud server.

This problem is solved according to the features of the independent claim 1. Further embodiments result from the depending claims.

In order to achieve the foregoing objectives, the present invention adopts the following technical solution.

A method using a mobile terminal to implement cloud searching, comprises:
A, receiving, by the mobile terminal, searching conditions inputted by a user;
B, executing, by the mobile terminal, local searching and detecting whether networking is executed, executing step C if networking is executed, and returning local searching results if networking is not executed;
C, detecting, by the mobile terminal, whether the local stores user account information, and connecting to a cloud server when the local of the mobile terminal stores the user account information;
D, transmitting, by the mobile terminal, the searching conditions to the cloud server; and
E, executing, by the cloud server, cloud searching according to the searching conditions, and returning searching results to the mobile terminal.

According to the method using a mobile terminal to implement cloud searching, after step C and before step D, the method for searching information further comprises:
C1, transmitting, by the mobile terminal, the local user account information to the cloud server to verify, and executing step D after the local user account information passes the verification of the cloud server.

According to the method using a mobile terminal to implement cloud searching, in step C1, when the mobile terminal transmits the user account information to the cloud server, a preset encryption algorithm is adopted to encrypt and pack the user account information into a data packet and then transmit the data packet.

According to the method using a mobile terminal to implement cloud searching, step C further comprises: when detecting that the local of the mobile terminal does not store the user account information, displaying, by the mobile terminal: no upload history, whether to create a cloud account and try out the cloud server.

According to the method using a mobile terminal to implement cloud searching, step E specifically comprises:
E1, looking up all files stored by the user account in the cloud server;
E2, matching all the files stored by the user account according to the searching conditions; and
E3, transmitting the matched files to the mobile terminal.

According to the method using a mobile terminal to implement cloud searching, step E3 specifically comprises: packing the matched files into a data packet by using a preset encryption algorithm and transmitting the data packet to the mobile terminal.

According to the method using a mobile terminal to implement cloud searching, after step E, the method further comprises displaying, by the mobile terminal, the local searching results and the cloud searching results on the same user interface.

According to the method using a mobile terminal to implement cloud searching, step D further comprises:
D1, after the searching conditions are encrypted by using the preset encryption algorithm, packing, by the mobile terminal, the searching conditions into a data packet and transmitting the data packet to the cloud server; and
D2, receiving, by the cloud server, the data packet, and decrypting the data packet by using a preset decryption algorithm.

According to the method using a mobile terminal to implement cloud searching, the searching conditions comprise keywords and/or directories.

According to the method using a mobile terminal to implement cloud searching, the preset encryption algorithm is an MD5 encryption algorithm.

Also, a method using a mobile terminal to implement cloud searching is suggested, the method comprising:
A, receiving, by the mobile terminal, searching conditions inputted by a user;
B, executing, by the mobile terminal, local searching and detecting whether networking is executed, executing step C if networking is executed, and returning local searching results if networking is not executed;
C, detecting, by the mobile terminal, whether the local stores user account information, and connecting to a cloud server when the local of the mobile terminal stores the user account information;
C1, transmitting, by the mobile terminal, the local user account information to the cloud server to verify, and executing step D after the local user account information passes the verification of the cloud server.
D, transmitting, by the mobile terminal, the searching conditions to the cloud server; and
E, executing, by the cloud server, cloud searching according to the searching conditions, and returning searching results to the mobile terminal,
   - wherein in step C1, when the mobile terminal transmits the user account information to the cloud server, a preset encryption algorithm is adopted to encrypt and pack the user account information into a data packet and then transmit the data packet, the cloud server, after receiving the encrypted data packet, parses the data packet first, then decrypts the data packet by using a preset algorithm, and then carries out corresponding treatment,
   - step B further comprises: prompting the user whether to turn on WIFI network or 3G network when the mobile terminal is not networked.

In an embodiment, step C further comprises: when detecting that the local of the mobile terminal does not store the user account information, displaying, by the mobile terminal: no upload history, whether to create a cloud account and try out the cloud server.

In an embodiment, step E comprises:
E1, looking up all files stored by the user account in the cloud server;
E2, matching all the files stored by the user account according to the searching conditions; and
E3, transmitting the matched files to the mobile terminal.

In an embodiment, step E3 comprises: packing the matched files into a data packet by using a preset encryption algorithm and transmitting the data packet to the mobile terminal.

In an embodiment, after step E, the method further comprises displaying, by the mobile terminal, the local searching results and the cloud searching results on the same user interface.

In an embodiment, step D further comprises:
D1, after the searching conditions are encrypted by using the preset encryption algorithm, packing, by the mobile terminal, the searching conditions into a data packet and transmitting the data packet to the cloud server; and
D2, receiving, by the cloud server, the data packet, and decrypting the data packet by using a preset decryption algorithm.

In an embodiment, the searching conditions comprise keywords and/or directories.

In an embodiment, the preset encryption algorithm is an MD5 encryption algorithm.

Compared with the prior art, in the method using a mobile terminal to implement cloud searching provided by the present invention, data on the local of the mobile terminal and data on the cloud server are searched simultaneously according to the searching conditions, and the searching results of the local and the cloud server are displayed on the same user interface, so that the data stored by the user can be searched effectively and quickly, thus bringing great convenience to the user. Moreover, the data is stored in the cloud server, and the user does not need to worry that the data may be lost. An encryption technology is adopted while transmitting files, thus improving the data transmission security.

The aforementioned characteristics, features and advantages of the invention as well as the way they are achieved will be further illustrated in connection with the following examples and considerations as discussed in view of the figures.
- FIG.1: is a flow chart of a method using a mobile terminal to implement cloud searching according to the present invention.
- FIG.2: is a sequence chart of the method using a mobile terminal to implement cloud searching according to the present invention.

To make the objective, technical solution and effects of the present invention more clear, the present invention is further described in details with reference to the drawings and embodiments hereinafter. It should be understood that the specific embodiments described here are merely used for explaining the present invention, but are not intended to limit the present invention.

The present invention provides a method using a mobile terminal to implement cloud searching, which is a method for looking up data based on local information search results of the mobile terminal and the cloud searching results carried out by a cloud server.

Cloud computing relates to providing dynamic easily-extensible and usually-virtualized resources generally through Internet based on the increasing, using and delivering modes of relevant services of the Internet. Cloud is a metaphor of network and Internet. The delivering and using modes of IT (Information Technology) infrastructure relate to obtaining the resources needed according to an easily-extensible manner on demand through the network. The delivering and using modes of service relate to obtaining the services needed according to an easily-extensible manner on demand through the network. Due to such factors as quickly increasing mobile users and the aspect of the storage information of the mobile terminal, a number of servers are needed, and a cloud computing service is adopted, thus being capable of effectively solving the elastic growing and the bulk data processing capacity of the servers.

Because the information of the users on the cloud server is involved, the unique number of the mobile terminal or SIM card may be used as the unique number. If the unique number of the mobile terminal is used in the cloud server, in case that the mobile terminal is in the hands of others, the information on the cloud server can be acquired without passing verification, thus causing lower information storage security. If the SIM card is used as the unique number, in case that the user changes card, the information of the SIM card previously used by the user may be lost. According to the present invention, a manner of registering or distributing username and password is adopted to protect the user account information on the local of the mobile terminal and the cloud server. Moreover, the user verification information may be saved in the mobile terminal, and verification during each time of information acquisition is not required. However, the user may make corresponding settings in the case that the mobile terminal is changed, so as to eliminate the user verification information stored on the mobile terminal.

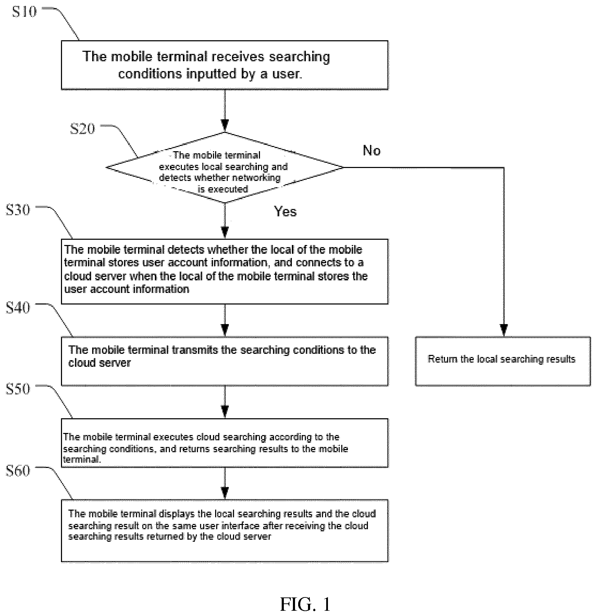

Referring to FIG.1, the method using a mobile terminal to implement cloud searching provided by the present invention comprises the following steps.
S10: The mobile terminal receives searching conditions inputted by a user.

In the embodiment, the searching conditions comprise keywords and/or directories. Keyword searching relates to sequencing all or partial files names of the information of a specific account stored on the cloud server according to an alphabetical order or stroke order, and then looking up. Directory searching relates to separately storing the information of the specific account stored on the cloud server under different directories according to the file formats, wherein the directories may have lower directories and third-level directories. The cloud server looks up under each directory according to the searching conditions. The embodiment may also adopt a method combining keyword searching and directory searching to search the files stored on the cloud server.
S20: The mobile terminal: executes local searching and detects whether networking is executed; executes step C if networking is executed; and returns local searching results if networking is not executed.

The files stored on the local of the mobile terminal may not be as many as that stored on the cloud server, and do not need to be networked; therefore, the local searching results may be returned faster than the cloud searching results. Therefore, when the mobile terminal displays the local searching results, cloud searching may be carried out at the backstage simultaneously. When the mobile terminal is not networked, the user is prompted whether to turn on WIFI network or 3G network.
S30: The mobile terminal detects whether the local of the mobile terminal stores user account information, and connects to a cloud server when the local of the mobile terminal stores the user account information

During concrete implementation, when detecting that the local of the mobile terminal does not store the user account information, the mobile terminal displays: no upload history, whether to create a cloud account and try out the cloud server. When detecting that the local of the mobile terminal does not store the user account information, the mobile terminal is connected to the cloud server. Then the mobile terminal receives the user account information uploaded by the user and transmits the user account information to the cloud server to verify. When the user account information passes through the verification of the cloud server, the mobile terminal transmits the searching conditions to the cloud server. When the user account information fails to pass through the verification, the mobile terminal sends a verification failure message to the user.

In the embodiment of the present invention, when the mobile terminal transmits the user account information to the cloud server, a preset encryption algorithm is adopted to encrypt the user account information, pack the user account information into a data packet and then transmit the user account information so as to increase the user information security. After the cloud server receives the encrypted data packet, the cloud server decrypts the data packet by using a preset algorithm and then executes corresponding treatment.
S40: The mobile terminal transmits the searching conditions to the cloud server.

When the mobile terminal transmits the searching conditions to the cloud server, the mobile terminal first encrypts the searching conditions by using a preset encryption algorithm, packs the searching conditions into a data packet and then transmits the data packet to the cloud server. Then the cloud server receives the data packet, parses the data packet and decrypts the data packet by using a preset decryption algorithm.
S50: The mobile terminal executes cloud searching according to the searching conditions, and returns searching results to the mobile terminal.

Step S50 specifically comprises: looking up, by the cloud server, all files stored by the user account in the cloud server firstly; matching all the files stored by the user account according to the searching conditions; and transmitting the matched files to the mobile terminal. Moreover, when the cloud server sends the matched files to the mobile terminal, the cloud server also needs to pack the matched files into a data packet and transmits the data packet to the mobile terminal so as to ensure the data transmission security.
S60: The mobile terminal displays the local searching results and the cloud searching result on the same user interface after receiving the cloud searching results returned by the cloud server.

In the embodiment of the present invention, the mobile terminal displays the information on the local and on the cloud in a form of list. A display page of the mobile terminal includes two parts. One part displays the storage result of the local of the mobile terminal and that of the cloud server. Moreover, the searching results of the cloud server are put behind the local searching results. The other part displays the total piece numbers of information.

During concrete implementation, because the local searching speed is faster, the user interface may display the storage result of the local of the mobile terminal very quickly, and acquire the cloud searching results simultaneously. At this time, the user interface may display the progress bar of the cloud searching to prompt the mobile terminal to acquire the cloud results.

In the present invention, the user information security is confirmed by encrypting the transmitted data, wherein the preset encryption algorithm is an MD5 encryption algorithm or other encryption algorithm. The decryption algorithm is an MD5 decryption algorithm or other corresponding decryption algorithm. In order to ensure the data security of the user, the data stored on the local of the mobile terminal and on the cloud server may not be lost unless the data is artificially deleted. The user data is stored after being encrypted in the cloud server, and needs to be decrypted before being displayed. Moreover, during querying, the transmitted searching conditions carry the unique identification of the user simultaneously. In this way, the information returned by the cloud server is the user information, and the case of returning other user information will not appear.

When the mobile terminal is communicated with the cloud server, a https protocol may be used to verify such user account information as username, password and the like, and a http protocol may be used to transmit the searching conditions on the cloud server. The data may be transmitted in such data formats as json or xml, because json or xml data may meet variable data requirements. The mobile terminal shall have corresponding parsing codes to parse the data in the mobile terminal and display the data to the user. Certainly, other protocols may be adopted when the mobile terminal is communicated with the cloud server, and data transmission formats may also be adopted to transmit the data, which may not be limited in the present invention.

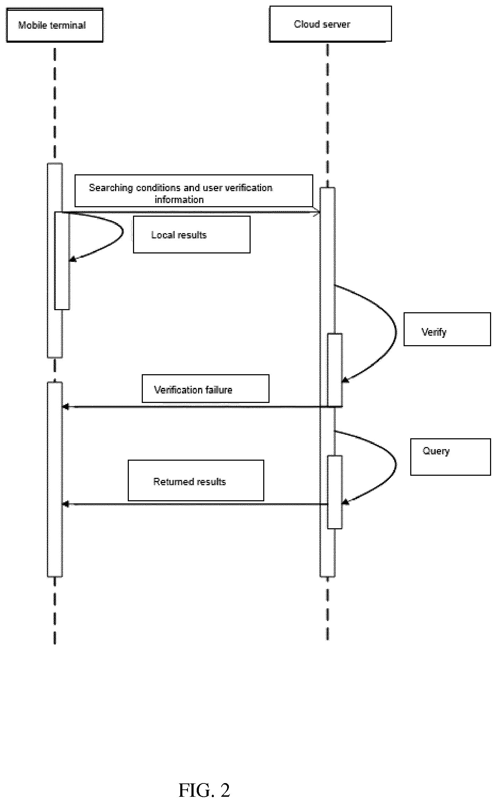

For convenient understanding, the method using a mobile terminal to implement cloud searching provided by the present invention is described in detail with reference to the sequence chart (as shown in FIG.2) of the method for cloud searching and respectively taking content-based searching (the contents relating to short message and documents) and data-based searching as the application embodiments.

### Short message-based content searching

It is supposed that a user Zhang San has an account number at the cloud: zhangsan, and the password is: 123; moreover, the user has already uploaded a plurality of short messages and documents, and the user stores the short messages both on the mobile terminal and on the cloud server. When the user needs to search the short messages using keywords, the user may search on the local of the mobile terminal and the cloud server through the following manner.

First step: the user Zhang San enables the searching function of the mobile terminal and inputs keyword "hello" on the mobile terminal.

Second step: the mobile terminal calls the searching function of a local short message library to search whether the local has the short messages containing "hello", and arrange and display the short messages according to the number of appearances and the positions in the short messages. Meanwhile, the mobile terminal enables the network monitoring function to prompt the user whether to be networked. If the mobile terminal is not networked, a message "the device is not networked, whether to turn on WIFI or 3G network" pops up and the local searching results of the mobile terminal are displayed.

Third step: when the mobile terminal is networked, because it is supposed that the local has stored the username and the password, the username and the password are directly encrypted via an MD5 or other encryption algorithm, then is packed into a data packet and transmitted to the cloud server to verify. If the data packet fails to pass through the verification, a "verification failure" message prompt box pops up.

Fourth step: after the data packet passes through verification, the mobile terminal uploads the searching conditions to the cloud server, namely the searching keyword "hello". Similarly, the keyword also needs to be encrypted via MD5 or other encryption algorithms, packed into a data packet and then transmitted.

Fifth step: the cloud server receives the searching conditions, decrypts and extracts the searching keyword "hello". In the files uploaded by the user, the file storing the short messages is looked up, the contents of the short messages are extracted, and are divided into short messages one by one. Then the characters and phrases of "hello" in all the short messages are compared and matched. After the characters and phrases are successfully compared and matched, the successfully matched short messages are marked.

Sixth step: the cloud server records the number of all the short messages including "hello" according to the mark and the specific positions of the files in which the short messages are located. Moreover, the files are packed into a data packet by using an encryption algorithm and transmitted to a mobile terminal having a specific identification of "Zhang San".

Seventh step: when the user Zhang San browses the short messages including the keyword "hello" at the local, the mobile terminal receives and parses the data packet transmitted by the server at the backstage. The parsed results are added behind the local results in a form of short message, and the mark of the results of the cloud server is added behind the short message.

Although the storage formats of the documents and the short messages are different on the cloud server, the process of searching documents and searching short messages are basically the same. Therefore, it is not repeatedly described any longer.

### Data-based content searching

The cloud server needs to add a date time identification on the uploaded file firstly. For example, for the file uploaded to the cloud server by the user Zhang San at 13:13:30 on 12 May 2012, Saturday, the cloud server may add a date time stamp behind the unique identifier of the file. For example, zhangsan20120512131330 is added at the tail end of the name of the file saved on the cloud server. The file format here is decided according to the storage requirements of the cloud server on the file. Because the cloud server arranges all the stored files according to the dates, when the user Zhang San inputs the keywords "20120512" on the mobile terminal, the cloud server extracts all the stored files which include the user identification, the date and the time at the tail end of the file names. Whether the usernames are consistent are compared first. Then, whether the date and the time are consistent are compared. If the searching conditions are satisfied, all the files including 20120512 in the file names are returned to the mobile terminal of Zhang San, and the returned results are parsed and displayed through the mobile terminal.

To sum up, in the method using a mobile terminal to implement cloud searching provided by the present invention, data on the local of the mobile terminal and data on the cloud server are searched simultaneously according to the searching conditions, and the searching results of the local and the cloud server are displayed on the same user interface, so that the data stored by the user can be searched effectively and quickly, thus bringing great convenience to the user. Moreover, the data is stored in the cloud server, so that the user need not worry that the data may be lost. An encryption technology is adopted while transmitting files, thus improving the data transmission security.

It should be understood that a person having ordinary skill in the art may make equivalent replacements or alternations according to the technical solution and concept of the present invention. All these replacements or alternations shall fall within the protection scope of the claims of the present invention.

## Claims

1. A method (S10, S20, S30, S40, S50, S60) using a mobile terminal to implement cloud searching, comprising:
A, receiving, by the mobile terminal, searching conditions inputted by a user (S10);
B, executing, by the mobile terminal, local searching in the mobile terminal for data stored by the user in a local storage of the mobile terminal and detecting whether networking is executed (S20), executing steps C to E (S30, S40, S50) if networking is executed, and returning only local searching results if networking is not executed;
C, detecting, by the mobile terminal, whether the local storage stores user account information, and connecting to a cloud server when the local storage of the mobile terminal stores the user account information (S30);
D, transmitting, by the mobile terminal, the searching conditions to the cloud server (S40), wherein the transmitted searching conditions carry a unique identification of the user, and when the mobile terminal communicates with the cloud server, a https protocol is used to verify user account information, and a http protocol is used to transmit the searching conditions to the cloud server, and
E, executing, by the cloud server, cloud searching according to the searching conditions for data stored by the user in the cloud server, and returning searching results to the mobile terminal (S50), wherein
- the mobile terminal displays the searching results performed on the local storage and on the cloud in a form of list,
- a display page of the mobile terminal includes two parts, one part displaying the search results performed on the local storage of the mobile terminal and the search results performed on the cloud server, and another part displaying a total number of search results,
- the search results of the cloud server are put behind the local searching results,
and wherein, after step C (S30) and before step D (S40), the method further comprises:
C1, transmitting, by the mobile terminal, the local user account information to the cloud server for verification, and executing step D (S40) after the local user account information passes the verification to the cloud server.
- wherein in step C1, when the mobile terminal transmits the user account information to the cloud server, a preset encryption algorithm is adopted to encrypt and pack the user account information into a data packet and then transmit the data packet,
and wherein
- step C (S30) further comprises: when detecting that the local storage of the mobile terminal does not store the user account information, displaying, by the mobile terminal: no upload history, whether to create a cloud account and trying out the cloud server,
and wherein, when the mobile terminal displays the local searching results, the cloud searching is carried out at the backstage simultaneously.

2. The method (S10, S20, S30, S40, S50, S60) using a mobile terminal to implement cloud searching according to claim 1,
- wherein in step C1, when the mobile terminal transmits the user account information to the cloud server, a preset encryption algorithm is adopted to encrypt and pack the user account information into a data packet and then transmit the data packet, the cloud server, after receiving the encrypted data packet, parses the data packet first, then decrypts the data packet by using a preset algorithm, and then carries out corresponding treatment,
- step B further comprises: prompting the user whether to turn on WIFI network or 3G network when the mobile terminal is not networked.

3. The method (S10, S20, S30, S40, S50, S60) using a mobile terminal to implement cloud searching according to any of the preceding claims, wherein the preset encryption algorithm is an MD5 encryption algorithm.

4. The method (S10, S20, S30, S40, S50, S60) using a mobile terminal to implement cloud searching according to any of the preceding claims, wherein step E (S50) specifically comprises:
E1, looking up all files stored by the user account in the cloud server;
E2, matching all the files stored by the user account according to the searching conditions; and
E3, transmitting the matched files to the mobile terminal.

5. The method (S10, S20, S30, S40, S50, S60) using a mobile terminal to implement cloud searching according to claim 4, wherein step E3 specifically comprises: packing the matched files into a data packet by using a preset encryption algorithm and transmitting the data packet to the mobile terminal.

6. The method (S10, S20, S30, S40, S50, S60) using a mobile terminal to implement cloud searching according to any of the preceding claims, wherein after step E (S50), the method further comprises displaying, by the mobile terminal, the local searching results and the cloud searching results on the same user interface (S60).

7. The method (S10, S20, S30, S40, S50, S60) using a mobile terminal to implement cloud searching according to any of the preceding claims, wherein step D (S40) further comprises:
D1, after the searching conditions are encrypted by using the preset encryption algorithm, packing, by the mobile terminal, the searching conditions into a data packet and transmitting the data packet to the cloud server; and
D2, receiving, by the cloud server, the data packet, and decrypting the data packet using a preset decryption algorithm.

8. The method (S10, S20, S30, S40, S50, S60) using a mobile terminal to implement cloud searching according to any of the preceding claims, wherein the searching conditions comprise keywords and/or directories.

## Patentansprüche

1. Verfahren (S10, S20, S30, S40, S50, S60) unter Verwendung eines mobilen Endgeräts zum Implementieren einer Cloudsuche, das Folgendes umfasst:
A, Empfangen durch das mobile Endgerät von Suchbedingungen, die von einem Benutzer eingegeben wurden (S10);
B, Ausführen durch das mobile Endgerät einer lokalen Suche im mobilen Endgerät nach Daten, die vom Benutzer in einem lokalen Speicher des mobilen Endgeräts gespeichert wurden, und Detektieren, ob eine Vernetzung ausgeführt wird (S20), Ausführen der Schritte C bis E (S30, S40, S50), wenn eine Vernetzung ausgeführt wird, und Zurückgeben nur von lokalen Suchergebnissen, wenn keine Vernetzung ausgeführt wird;
C, Detektieren durch das mobile Endgerät, ob im lokalen Speicher Benutzerkontoinformationen gespeichert sind, und Verbinden mit einem Cloudserver, wenn im lokalen Speicher des mobilen Endgeräts die Benutzerkontoinformationen gespeichert sind (S30);
D, Übertragen der Suchbedingungen zum Cloudserver (S40) durch das mobile Endgerät, wobei die übertragenen Suchbedingungen eine eindeutige Identifikation des Benutzers enthalten und, wenn das mobile Endgerät mit dem Cloudserver kommuniziert, ein https-Protokoll verwendet wird, um Benutzerkontoinformationen zu verifizieren, und ein http-Protokoll verwendet wird, um die Suchbedingungen zum Cloudserver zu übertragen, und
E, Ausführen durch den Cloudserver einer Cloudsuche gemäß den Suchbedingungen nach Daten, die vom Benutzer auf dem Cloudserver gespeichert wurden, und Zurückgeben von Suchergebnissen an das mobile Endgerät (S50), wobei
- das mobile Endgerät die Suchergebnisse, die im lokalen Speicher und in der Cloud durchgeführt wurden, in Form einer Liste anzeigt,
- eine Anzeigeseite des mobilen Endgeräts zwei Teile beinhaltet, wobei ein Teil die Suchergebnisse, die im lokalen Speicher des mobilen Endgeräts durchgeführt wurden, und die Suchergebnisse, die auf dem Cloudserver durchgeführt wurden, anzeigt und ein anderer Teil eine Gesamtzahl von Suchergebnissen anzeigt,
- die Suchergebnisse des Cloudservers hinter die lokalen Suchergebnisse gestellt werden,
und wobei das Verfahren nach Schritt C (S30) und vor Schritt D (S40) ferner Folgendes umfasst:
C1, Übertragen durch das mobile Endgerät der lokalen Benutzerkontoinformationen zum Cloudserver zur Verifizierung und Ausführen von Schritt D (S40), nachdem die lokalen Benutzerkontoinformationen die Verifizierung zum Cloudserver bestanden haben.
- wobei in Schritt C1, wenn das mobile Endgerät die Benutzerkontoinformationen zum Cloudserver überträgt, ein voreingestellter Verschlüsselungsalgorithmus eingesetzt wird, um die Benutzerkontoinformationen zu verschlüsseln und in ein Datenpaket zu verpacken und das Datenpaket dann zu übertragen,
und wobei
- Schritt C (S30) ferner Folgendes umfasst: wenn detektiert wird, dass die Benutzerkontoinformationen nicht im lokalen Speicher des mobilen Endgeräts gespeichert sind, Anzeigen durch das mobile Endgerät: kein Hochladeverlauf, ob ein Cloudkonto erstellt werden soll, und Ausprobieren des Cloudservers,
und wobei, wenn das mobile Endgerät die lokalen Suchergebnisse anzeigt, die Cloudsuche gleichzeitig im Hintergrund vorgenommen wird.

2. Verfahren (S10, S20, S30, S40, S50, S60) unter Verwendung eines mobilen Endgeräts zum Implementieren einer Cloudsuche nach Anspruch 1,
- wobei in Schritt C1, wenn das mobile Endgerät die Benutzerkontoinformationen zum Cloudserver überträgt, ein voreingestellter Verschlüsselungsalgorithmus eingesetzt wird, um die Benutzerkontoinformationen zu verschlüsseln und in ein Datenpaket zu verpacken und das Datenpaket dann zu übertragen, der Cloudserver, nachdem er das verschlüsselte Datenpaket empfangen hat, zuerst das Datenpaket parst, dann das Datenpaket unter Verwendung eines voreingestellten Algorithmus entschlüsselt und dann eine entsprechende Behandlung vornimmt,
- Schritt B ferner Folgendes umfasst: Befragen des Benutzers, ob ein WIFI-Netzwerk oder ein 3G-Netzwerk eingeschaltet werden soll, wenn das mobile Endgerät nicht vernetzt ist.

3. Verfahren (S10, S20, S30, S40, S50, S60) unter Verwendung eines mobilen Endgeräts zum Implementieren einer Cloudsuche nach einem der vorhergehenden Ansprüche, wobei der voreingestellte Verschlüsselungsalgorithmus ein MD5-Verschlüsselungsalgorithmus ist.

4. Verfahren (S10, S20, S30, S40, S50, S60) unter Verwendung eines mobilen Endgeräts zum Implementieren einer Cloudsuche nach einem der vorhergehenden Ansprüche, wobei Schritt E (S50) speziell Folgendes umfasst:
E1, Suche nach allen Dateien, die vom Benutzerkonto auf dem Cloudserver gespeichert wurden;
E2, Abgleichen aller Dateien, die vom Benutzerkonto gemäß den Suchbedingungen gespeichert wurden; und
E3, Übertragen der abgeglichen Dateien zum mobilen Endgerät.

5. Verfahren (S10, S20, S30, S40, S50, S60) unter Verwendung eines mobilen Endgeräts zum Implementieren einer Cloudsuche nach Anspruch 4, wobei Schritt E3 speziell Folgendes umfasst: Verpacken der abgeglichen Dateien unter Verwendung eines voreingestellten Verschlüsselungsalgorithmus in ein Datenpaket und Übertragen des Datenpakets zum mobilen Endgerät.

6. Verfahren (S10, S20, S30, S40, S50, S60) unter Verwendung eines mobilen Endgeräts zum Implementieren einer Cloudsuche nach einem der vorhergehenden Ansprüche, wobei nach Schritt E (S50) das Verfahren ferner das Anzeigen durch das mobile Endgerät der lokalen Suchergebnisse und der Cloudsuchergebnisse auf derselben Benutzerschnittstelle umfasst (S60).

7. Verfahren (S10, S20, S30, S40, S50, S60) unter Verwendung eines mobilen Endgeräts zum Implementieren einer Cloudsuche nach einem der vorhergehenden Ansprüche, wobei Schritt D (S40) ferner Folgendes umfasst:
D1, nachdem die Suchbedingungen unter Verwendung des voreingestellten Verschlüsselungsalgorithmus verschlüsselt wurden, Verpacken durch das mobile Endgerät der Suchbedingungen in ein Datenpaket und Übertragen des Datenpakets zum Cloudserver und
D2, Empfangen des Datenpakets durch den Cloudserver und Entschlüsseln des Datenpakets unter Verwendung eines voreingestellten Entschlüsselungsalgorithmus.

8. Verfahren (S10, S20, S30, S40, S50, S60) unter Verwendung eines mobilen Endgeräts zum Implementieren einer Cloudsuche nach einem der vorhergehenden Ansprüche, wobei die Suchbedingungen Schlüsselwörter und/oder Verzeichnisse umfassen.

## Revendications

1. Procédé (S10, S20, S30, S40, S50, S60) utilisant un terminal mobile pour mettre en oeuvre une recherche en nuage, comprenant :
A. la réception, par le terminal mobile, des conditions de recherche saisies par un utilisateur (S10) ;
B. l'exécution, par le terminal mobile, d'une recherche locale dans le terminal mobile de données stockées par l'utilisateur dans une mémoire locale du terminal mobile et détection du fait qu'une mise en réseau est exécutée (S20) ou non, exécution des étapes C à E (S30, S40, S50) si la mise en réseau est exécutée, et renvoi des seuls résultats de la recherche locale si la mise en réseau n'est pas exécutée ;
C. la détection, par le terminal mobile, du fait que le stockage local stocke les informations du compte de l'utilisateur et la connexion à un serveur en nuage lorsque le stockage local du terminal mobile stocke les informations du compte de l'utilisateur (S30) ;
D. la transmission, par le terminal mobile, des conditions de recherche au serveur en nuage (S40), les conditions de recherche transmises portant une identification unique de l'utilisateur, et lorsque le terminal mobile communique avec le serveur en nuage, un protocole https étant utilisé pour vérifier les informations du compte de l'utilisateur et un protocole http étant utilisé pour transmettre les conditions de recherche au serveur en nuage, et
E. l'exécution, par le serveur en nuage, d'une recherche en nuage en fonction des conditions de recherche des données stockées par l'utilisateur sur le serveur en nuage et renvoi des résultats de la recherche au terminal mobile (S50),
- le terminal mobile affichant les résultats de la recherche effectuée sur le stockage local et sur le stockage en nuage sous forme de liste,
- une page d'affichage du terminal mobile comprenant deux parties, une partie affichant les résultats de la recherche effectuée sur le stockage local du terminal mobile et les résultats de la recherche effectuée sur le serveur en nuage, et une autre partie affichant un nombre total de résultats de recherche,
- les résultats de la recherche du serveur en nuage étant placés derrière les résultats de la recherche locale et, après l'étape C (S30) et avant l'étape D (S40), le procédé comprenant en outre :
Cl.la transmission, par le terminal mobile, des informations du compte de l'utilisateur local au serveur en nuage pour vérification, et l'exécution de l'étape D (S40) après que les informations du compte de l'utilisateur local ont passé la vérification au serveur en nuage,
- à l'étape C1, lorsque le terminal mobile transmet les informations du compte de l'utilisateur au serveur en nuage, un algorithme de cryptage prédéfini étant adopté pour crypter et intégrer les informations du compte de l'utilisateur dans un paquet de données, puis transmettre le paquet de données,
et
- l'étape C (S30) comprenant en outre : lors de la détection du fait que le stockage local du terminal mobile ne stocke pas les informations de compte de l'utilisateur, l'affichage, par le terminal mobile des informations suivantes : pas d'historique de téléchargement, qu'il s'agisse de créer un compte en nuage et d'essayer le serveur en nuage,
et lorsque le terminal mobile affiche les résultats de la recherche locale, la recherche en nuage étant effectuée simultanément en second plan.

2. Procédé (S10, S20, S30, S40, S50, S60) utilisant un terminal mobile pour mettre en oeuvre une recherche en nuage selon la revendication 1,
- à l'étape C1, lorsque le terminal mobile transmet les informations du compte de l'utilisateur au serveur en nuage, un algorithme de cryptage prédéfini étant adopté pour crypter et intégrer les informations du compte de l'utilisateur dans un paquet de données, puis transmettre le paquet de données, le serveur en nuage, après avoir reçu le paquet de données crypté, analysant d'abord le paquet de données, puis décryptant le paquet de données en utilisant un algorithme prédéfini, puis effectuant le traitement correspondant,
- l'étape B comprend en outre : l'invitation incitant l'utilisateur à activer le réseau WIFI ou le réseau 3G lorsque le terminal mobile n'est pas en réseau.

3. Procédé (S10, S20, S30, S40, S50, S60) utilisant un terminal mobile pour mettre en oeuvre une recherche en nuage selon l'une quelconque des revendications précédentes, dans lequel l'algorithme de cryptage prédéfini est un algorithme de cryptage MD5.

4. Procédé (S10, S20, S30, S40, S50, S60) utilisant un terminal mobile pour mettre en oeuvre une recherche en nuage selon l'une quelconque des revendications précédentes, dans lequel l'étape E (S50) comprend spécifiquement :
E1. la recherche de tous les fichiers stockés par le compte de l'utilisateur sur le serveur en nuage ;
E2. la vérification de la correspondance de tous les fichiers stockés par le compte de l'utilisateur en fonction des conditions de recherche ; et
E3. la transmission des fichiers correspondants au terminal mobile.

5. Procédé (S10, S20, S30, S40, S50, S60) utilisant un terminal mobile pour mettre en oeuvre une recherche en nuage selon la revendication 4, dans lequel l'étape E3 comprend spécifiquement : l'intégration des fichiers correspondants dans un paquet de données en utilisant un algorithme de cryptage prédéfini et la transmission du paquet de données au terminal mobile.

6. Procédé (S10, S20, S30, S40, S50, S60) utilisant un terminal mobile pour mettre en oeuvre une recherche en nuage selon l'une quelconque des revendications précédentes, après l'étape E (S50), le procédé comprenant en outre l'affichage, par le terminal mobile, des résultats de la recherche locale et des résultats de la recherche en nuage sur la même interface d'utilisateur (S60).

7. Procédé (S10, S20, S30, S40, S50, S60) utilisant un terminal mobile pour mettre en oeuvre une recherche en nuage selon l'une quelconque des revendications précédentes, dans lequel l'étape D (S40) comprend en outre :
D1. après que les conditions de recherche ont été cryptées en utilisant l'algorithme de cryptage prédéfini, l'intégration, par le terminal mobile, des conditions de recherche dans un paquet de données et la transmission du paquet de données au serveur en nuage ; et
D2.la réception, par le serveur en nuage, du paquet de données, et le décryptage du paquet de données en utilisant un algorithme de décryptage prédéfini.

8. Procédé (S10, S20, S30, S40, S50, S60) utilisant un terminal mobile pour mettre en oeuvre une recherche en nuage selon l'une quelconque des revendications précédentes, dans lequel les conditions de recherche comprennent des mots-clés et/ou des répertoires.
